# DEMANDE DE BREVET EUROPEEN

(11) **EP 1 727 084 A1**
(43) Date de publication de la demande: **29.11.2006**
(21) Numéro de dépôt: 06290417.2
(22) Date de dépôt: 15.03.2006
(51) Int. Cl.: G06Q 10/00

(54) **Procédé de coordination et d'aide à la répartition de tâches au sein d'une équipe d'opérateurs**

(30) Priorité: 21.03.2005 FR 0502766
(71) Demandeur: GIAT Industries, 78000 Versailles (FR)
(72) Inventeur: Miotti, Luc, 78960 Voisin le Bretonneux (FR)
(74) Mandataire: Célanie, Christian

(57) **Abrégé**

L'invention concerne un système informatique de coordination et d'aide à la répartition de tâches au sein d'une équipe d'opérateurs (3) comprenant des terminaux (5) associés aux opérateurs et décomposés selon deux niveaux hiérarchiques, le premier niveau étant associé à un chef (3a) et le second niveaux étant associé à un exécutant (3b, 3c), ledit système comprenant des moyens de communication pour transmettre et assigner, dans une première étape, une répartition a priori des tâches vers les terminaux associés aux opérateurs, ***caractérisé*** en ce que les moyens de communication sont intégrés dans les terminaux pour permettre, dans une seconde étape, d'évaluer la faisabilité d'une tâche de l'exécutant par des moyens de calculs et dans une troisième étape permettre au terminal (5a) du chef (3a) de déterminer au moyen de calculs une répartition définitive coïncidant avec les informations locales précédemment renvoyées et de la transmettre vers les terminaux (5a, 5b) associés aux exécutants (3b, 3c).

## Description

La présente invention concerne un procédé et un système de coordination et d'aide à la répartition des tâches au sein d'une équipe répartie sur un terrain d'opération.

Ce domaine concerne les systèmes assistant des équipes coopératives. De telles équipes comportent plusieurs opérateurs. De telles équipes interviennent sur un terrain d'opération où le plus souvent les opérateurs sont répartis. De telles équipes peuvent être par exemple : une équipe d'unités secouristes réparties sur un terrain sinistré, une équipe de pompiers répartis sur un incendie de forêt, une équipe de bâtiments militaires sur un champ de bataille ou encore une équipe de renseignement chargé de collecter des informations sur une zone. La problématique générale de telles équipes est une bonne coordination pour que chaque opérateur réalise les tâches qui lui sont échues, afin que toutes les tâches soient réalisées, de préférence par l'opérateur le plus efficace pour cette réalisation, et que deux opérateurs ne tentent pas de réaliser la même tâche. Afin d'améliorer l'efficacité une organisation hiérarchique est souvent adoptée. Un opérateur particulier est le chef. Les autres opérateurs sont dénommés exécutants. Le chef peut aussi le cas échéant remplir une fonction d'exécutant.

Une problématique particulière de ce domaine est la répartition optimale des tâches entre tous les exécutants. I1 convient en effet d'une part d'affecter toutes les tâches (complétude) et d'autre part de n'affecter une tâche qu'à un unique exécutant (unicité). Il convient ensuite d'optimiser les chances de réussite en affectant une tâche à l'exécutant le plus apte à la traiter et à tout le moins à un exécutant en mesure de traiter ladite tâche. Pour les opérateurs de ce domaine, le temps est souvent un facteur critique. Il convient de réaliser une répartition optimale le plus rapidement possible.

Dans la pratique actuelle, le chef propose une répartition des tâches a priori. Cette répartition est généralement réalisée en affectant un secteur à chaque exécutant. Cette approche satisfait aux moins aux critères de complétude et d'unicité. Le chef transmet ensuite à chaque exécutant ses tâches. Les exécutants peuvent, le cas échéant, « négocier » les tâches qui leurs sont affectées. Ceci s'effectue par dialogue vocal entre l'exécutant et le chef par l'intermédiaire d'un système radio ou d'interphonie. Ce processus d'échange vocal prend un temps considérable. Chaque exécutant décide ensuite dans quel ordre doivent être traitées les tâches de son secteur. Le chef réalise la répartition soit « manuellement », soit assisté par un logiciel d'optimisation présent dans le système et suggérant une répartition.

Les inconvénients de cette pratique sont multiples. Un inconvénient majeur est que le chef a une vision globale du terrain d'opération. Il n'a pas accès aux réalités fines du terrain d'opération. Or ces réalités font souvent la différence entre une tâche aisément réalisable ou réalisable avec une bonne probabilité de réussite et une tâche quasiment irréalisable ou présentant une mauvaise probabilité de réussite. Ainsi la répartition proposée par le chef n'est souvent pas optimale. Un autre inconvénient est que chaque exécutant travaille séparément. Une fois ses taches affectées l'exécutant doit les réaliser même s'il n'est pas le plus qualifié. Un autre inconvénient, dans le cas où il n'y a pas de négociation, est qu'une tâche allouée au niveau global par le chef peut, confrontée à la réalité locale, s'avérer aberrante. La tâche reste cependant affectée à cet exécutant. Un autre inconvénient est que la répartition est effectuée une fois pour toute. Alternativement lorsqu'il y a négociation par radio ou interphone, le processus d'échange d'informations vocales entre le chef et chaque exécutant est très long.

Il est connu dans ce domaine d'utiliser des systèmes informatiques communicants. De tels systèmes permettent de disposer de moyens de calcul. De plus, chaque opérateur disposant d'un terminal de ce système informatique, doté d'une interface homme machine, peut obtenir des informations en provenance du système. Un opérateur peut aussi transmettre au système des informations qu'il est amené à collecter au cours de sa mission. Le système, comprenant des terminaux et des moyens de communications entre ces différents terminaux, assure une distribution pertinente des informations vers chaque opérateur.

La présente invention remédie aux différents inconvénients de la pratique actuelle en proposant des moyens permettant une négociation rapide entre le chef et l'exécutant. Ainsi, l'exécutant est présent dans la boucle de décision et il est ainsi possible de tenir compte des informations locales auquel l'exécutant peut seul avoir accès. L'invention apporte aussi des moyens coopératifs entre les exécutants.

L'invention a donc pour objet un système informatique de coordination et d'aide à la répartition de tâches au sein d'une équipe d'opérateurs comprenant des terminaux associés aux opérateurs et décomposés selon deux niveaux hiérarchiques, le premier niveau étant associé à un chef et le second niveaux étant associé à un exécutant, chaque terminal associé à un opérateur étant apte à échanger des informations avec les autres terminaux, ledit système comprenant des moyens de communication pour transmettre et assigner, dans une première étape, une répartition a priori des tâches vers les terminaux associés aux opérateurs, caractérisé en ce que les moyens de communication sont intégrés dans les terminaux pour permettre, dans une seconde étape, d'évaluer la faisabilité d'une tâche de l'exécutant par des moyens de calculs, la faisabilité de la tâche correspondant à des informations locales au terminal associé à l'exécutant, et de la transmettre vers le terminal associé au chef, l'étape d'évaluation étant répétée jusqu'à ce que toutes les tâches soient évaluées, et dans une troisième étape permettre au terminal du chef de déterminer au moyen de calculs une répartition définitive coïncidant avec les informations locales précédemment renvoyées et de la transmettre vers les terminaux associés aux exécutants.

Selon une caractéristique de l'invention, les terminaux comprennent des moyens pour affecter des valeurs de faisabilité à une tâche, correspondant chacune à un pourcentage de réussite prévisionnel dans la réalisation de ladite tâche.

Selon une autre caractéristique de l'invention, le système comprend des moyens automatiques de répartition des valeurs en deux sous-ensembles : un premier sous-ensemble A valant affectation, un second sous-ensemble N valant non-affectation et où, à la fin de la seconde étape, ledit système affecte automatiquement à l'aide du terminal une tâche à un exécutant lorsque ledit exécutant a évalué ladite tâche avec une faisabilité valant affectation et classe ladite tâche dans la répartition définitive.

Selon encore une autre caractéristique de l'invention, le système comporte un moyen apte à fournir des informations sur une tâche à au moins un exécutant.

Selon une autre caractéristique de l'invention, le moyen de fourniture d'informations d'un autre exécutant sur la tâche est accessible à un exécutant pour que lui soient communiquées des informations avant d'évaluer une tâche.

Selon une autre caractéristique de l'invention, le moyen de fourniture d'informations comprend une liste déroulante consultable par un exécutant, avant d'évaluer une tâche, pour choisir le plus approprié.

Selon une autre caractéristique de l'invention, les tâches correspondent à des localisations connues, le moyen s'orientant automatiquement vers la localisation qui correspond à une tâche, lorsque ladite tâche est proposée à l'évaluation.

Selon une autre caractéristique de l'invention, le système comprend une interface Homme/Machine à disposition du chef d'un groupe pour afficher en temps réel, pour chaque tâche, une représentation parmi n tâches d'un symbole graphique correspondant à la valeur de la faisabilité associée à ladite tâche.

Selon une autre caractéristique de l'invention, le système comprend une interface Homme/Machine à disposition du chef d'un groupe pour afficher en temps réel, pour chaque affectation d'une tâche à un exécutant, une représentation parmi n+1 d'un symbole graphique reliant la tâche et l'exécutant, n représentations correspondant chacune à une valeur de la faisabilité associée à ladite tâche et une représentation supplémentaire correspondant à l'affectation a priori.

Selon une autre caractéristique de l'invention, le système comprend une interface Homme/Machine à disposition de chaque exécutant pour lui afficher les mêmes représentations symboliques fournies au chef de groupe.

Selon une autre caractéristique de l'invention, les tâches sont des cibles ennemies à traiter, où le chef est un chef de groupe, où l'exécutant est un chef d'unité militaire et où le moyen apte à fournir des informations sur une tâche est un viseur de tir.

L'invention a également pour objet un système informatique pour assurer la coordination et l'aide à la répartition de tâches au sein d'une équipe d'opérateurs comprenant au moins deux niveaux hiérarchiques tels qu'un chef associé à au moins un exécutant, système caractérisé en ce qu'il comprend des terminaux informatiques équipant chaque opérateur et chef, ainsi que des moyens de communication permettant l'échange d'informations entre les différents niveaux hiérarchiques, les terminaux informatiques comprenant des moyens logiciels permettant la mise en oeuvre du procédé selon l'une des quelconques revendications précédentes.

Avantageusement, le système selon l'invention est appliqué à la délivrance des feux sur un champ de bataille.

L'invention concerne également un procédé de mise en oeuvre du système de coordination et d'aide à la répartition de tâches au sein d'une équipe d'opérateurs, caractérisé en ce qu'il comprend les étapes suivantes en alternance :
- proposition d'une tâche non affectée à un autre exécutant par le chef,
- évaluation de la tâche cet exécutant,
- classification par le système de ladite tâche dans la répartition définitive,
ou alternativement les étapes suivantes :
- affectation par le chef d'une tâche à un exécutant,
- classification par ledit système de ladite tâche dans la répartition définitive,
   ladite alternance étant réitérée, de préférence, jusqu'à ce que toutes les tâches soient affectées à un exécutant et soient classées dans la répartition définitive.

Avantageusement, lors de chaque évaluation d'une tâche, la valeur de faisabilité associée est remontée à au moins un niveau hiérarchique directement supérieur à celui de l'opérateur ayant acquitté la tâche.

Avantageusement, le procédé selon l'invention est mis en oeuvre dans un groupe dans un groupe associant plusieurs équipes d'opérateurs ayant chacune un chef, groupe comprenant également au moins un troisième niveau hiérarchique supervisant les différentes équipes, au moins un des chefs d'équipe étant également opérateur pour le troisième niveau hiérarchique.

Un avantage du procédé et du dispositif selon l'invention est de confronter une répartition globale a priori avec la réalité locale des exécutants afin d'optimiser une répartition finale coopérative.

Un autre avantage de l'invention est de permettre une mise en commun des ressources des différents opérateurs afin d'établir une répartition optimale.

Un autre avantage de l'invention est d'intégrer l'exécutant dans la boucle de décision, afin de lui permettre de négocier et d'accepter les tâches qui lui sont affectées.

Un autre avantage de l'invention est de permettre de déterminer une répartition optimale.

Un autre avantage de l'invention est d'effectuer cette répartition très rapidement, même lorsqu'elle est négociée.

Un autre avantage de l'invention est de permettre à tout moment de reprendre partiellement la répartition, en fonction de l'évolution du traitement des tâches.

Un autre avantage de l'invention est de permettre une répartition "en cascade" sur chacun des niveaux hiérarchiques d'un groupe.

Un autre avantage de l'invention est de fournir, avant la mise en exécution d'une répartition de tâches, à chaque échelon hiérarchique une indication prévisionnelle du taux de réussite espéré.

D'autres caractéristiques, détails et avantages de l'invention ressortiront plus clairement de la description détaillée donnée ci-après à titre indicatif en relation avec des dessins sur lesquels :
- la figure 1 illustre une équipe répartie sur un terrain d'opération,
- la figure 2 présente une équipe d'opérateurs utilisant un système selon l'invention,
- les figures 3, 4, 5 et 6 illustrent les étapes successives de mise en oeuvre du procédé sur un exemple.

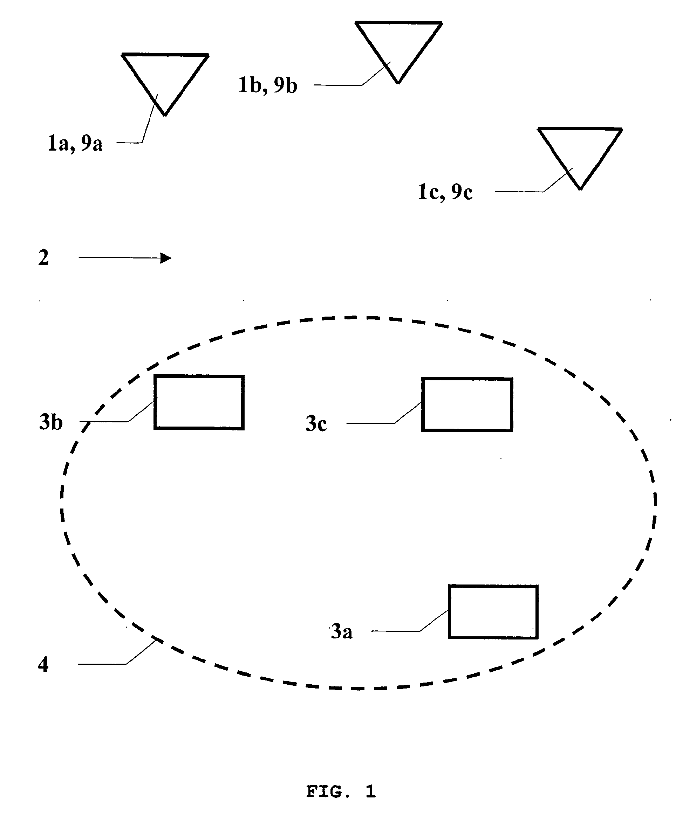

L'invention concerne un procédé de coordination et d'aide à la répartition de tâche au sein d'une équipe 4 d'opérateurs répartis sur un terrain d'opération 2. La figure 1 montre un schéma représentant un tel terrain d'opération 2 sur lequel est répartie une équipe 4. Cette équipe est composée d'opérateurs 3a, 3b, 3c qui collaborent afin de réaliser un ensemble de tâches 1a, 1b, 1c. Le terme opérateur désigne aussi bien un individu seul, exécutant, qu'un groupe, un servant seul ou en groupe d'un bâtiment, d'un véhicule ou d'une installation, tant fixe que mobile, terrestre, naviguant ou aérien. Le terme tâche désigne une action, située sur le terrain d'opération 2. Au moins un des opérateurs dispose des moyens d'action et des compétences nécessaires à la réalisation de ladite action. Le terrain d'opération dépend du contexte et peut être une zone sinistrée, une forêt en feu, un champ de bataille ou tout autre environnement auquel l'homme du métier saura généraliser l'objet de l'invention. La caractéristique commune de tous ces environnements et de nécessiter la mise en oeuvre coordonnée d'une équipe 4, afin de mettre en commun les moyens d'actions des différents opérateurs 3a, 3b, 3c afin de traiter l'ensemble des tâches 1a, 1b, 1c de manière optimale en terme de moyens, d'efficacité et de rapidité. L'organisation complète peut être organisée en niveaux hiérarchiques. A chaque niveau hiérarchique se trouvera une équipe comportant un chef qui coordonne la répartition des tâches entre des exécutants. Au plus haut niveau les tâches sont les plus globales alors qu'aux niveaux inférieurs les tâches deviennent de plus en plus détaillées. L'exécutant d'un niveau intermédiaire se voit attribuer une tâche partiellement globale. Cet opérateur, exécutant pour le niveau supérieur est chef pour un niveau inférieur. Ce chef subdivise sa tâche globale en tâches plus élémentaires qu'il répartit entre les exécutants de son équipe. Tout chef peut se réserver une partie des tâches élémentaires qu'il traite en tant qu'exécutant.

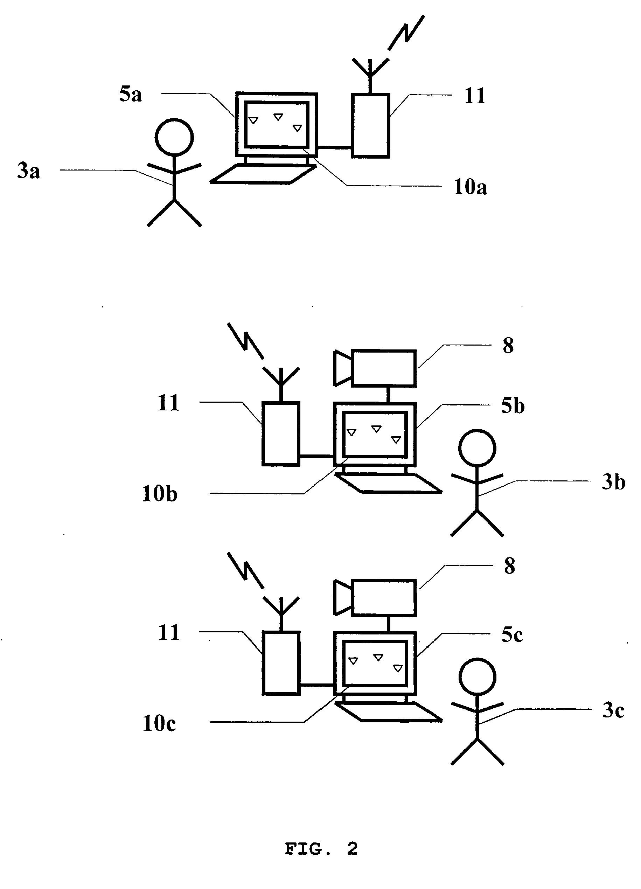

La figure 2 détaille l'équipement des opérateurs. Un opérateur particulier 3a est le chef. L'équipe en plus du chef comporte au moins un exécutant 3b, 3c. Le chef 3a peut aussi agir en tant qu'exécutant. Ceci est possible car l'exécution se fait en général après la répartition. Dans ce cas, le chef 3a effectue alternativement les actes attendus du chef et ceux attendus de l'exécutant. Chaque opérateur 3a, 3b, 3c est équipé d'un terminal 5a, 5b, 5c. Ces terminaux 5a, 5b, 5c font partie d'un système informatique. Ce système comprend des moyens (non représentés) permettant l'exécution de programmes informatiques offrant des capacités de calcul et de traitement de l'information. Il comprend des moyens de communications 11, permettant des échanges d'informations entre les terminaux 5a, 5b, 5c.

L'objet de l'invention est de réaliser une répartition et d'estimer sa probabilité de réussite. Une telle répartition affecte chaque tâche la à l'exécutant 3b, 3c disposant des moyens, des compétences, de la disponibilité et de la situation (localisation, équipement,...) relativement à ladite tâche 1a, les plus appropriés à la réussite de ladite tâche 1a. Cette répartition est optimale en ce que la totalité des tâches 1a, 1b, 1c est ainsi distribuée au mieux. En retour à chaque tâche est associée une probabilité de réussite espérée. L'ensemble des probabilités de réussite peut être synthétisé en une seule probabilité moyenne. Ces probabilités peuvent être remontées des niveaux hiérarchiques les plus bas vers les plus haut. Ainsi lorsque la répartition est terminée, le commandement dispose d'une indication de probabilité de réussite.

L'invention est le mieux décrite sous forme d'un procédé mais s'étend aussi au système permettant la mise en oeuvre dudit procédé. Ce procédé comprend une première étape consistant à déterminer une répartition a priori. Cette répartition consiste en un ensemble d'associations appariant une tâche 1a et un exécutant 3b. Chaque paire (tâche 1a, exécutant 3b) signifie que ladite tâche 1a est affectée a priori audit exécutant 3b. Cette répartition peut être réalisée par tout moyen ou méthode. Cette répartition peut être définie « manuellement » par le chef qui désigne chaque tâche 1a et l'exécutant 3b auquel la tâche 1a est affectée. Cette répartition peut être proposée par le système au moyen d'un programme informatique. Ce programme peut le cas échéant comporter une optimisation de l'affectation en fonction des paramètres des tâches et des exécutants auquel le système a accès. Il est aussi possible d'envisager toute méthode mixte : proposition d'une répartition par le système corrigée par le chef 3a ou définition d'une répartition par le chef 3a avec une assistance informatique. Quelle que soit l'approche retenue, l'assistance informatique permet de réaliser une répartition rapidement. L'assistance informatique du système comprendra avantageusement au moins le contrôle des deux critères de complétude et d'unicité.

Les moyens de communication sont intégrés dans les terminaux pour permettre, dans une seconde étape, d'évaluer la faisabilité d'une tâche de l'exécutant par des moyens de calculs, la faisabilité de la tâche correspondant à des informations locales au terminal associé à l'exécutant, et de la transmettre vers le terminal 5a associé au chef 3a. L'étape d'évaluation est répétée jusqu'à ce que toutes les tâches 1a, 1b, 1c soient évaluées. Dans une troisième étape on permet au terminal 5a du chef 3a de déterminer au moyen de calculs une répartition définitive coïncidant avec les informations locales précédemment renvoyées et de la transmettre vers les terminaux 5a, 5b associés aux exécutants 3b, 3c.

Dans l'art antérieur cette répartition a priori peut être imposée aux exécutants 3b, 3c. Dans ce cas, une caractéristique essentielle de l'invention est que cette répartition est proposée aux exécutants 3b, 3c pour évaluation. Une alternative est que l'exécutant donne son avis par dialogue vocal avec le chef, par radio ou interphone. Dans ce second cas, la caractéristique essentielle de l'invention est que la négociation s'effectue au travers du système (par envoi d'une évaluation) et par conséquent bien plus rapidement que par le dialogue.

Ainsi l'exécutant prend connaissance des tâches 1a qui lui ont été affectées a priori. L'exécutant dispose d'un avantage considérable en ce qu'il est sur place, en situation de déterminer s'il peut, selon lui, traiter une tâche qui lui est affectée avec de bonnes chances de réussite. Pour chaque tâche 1a qui lui échoit, l'exécutant vérifie, dans la situation qui est la sienne, en prenant si besoin des informations sur la tâche 1a et son environnement, si cette tâche semble réalisable. Pour chaque tâche 1a qui est passée en revue, l'exécutant 3a évalue la tâche 1a en lui affectant une faisabilité, valeur indicative de l'estimation de la probabilité de réussite de la tâche que l'exécutant 3b pense avoir, compte tenu des informations locales dont il dispose. Cette évaluation s'effectue au moyen du terminal 5a à la disposition de l'exécutant 3b. Une interface homme machine possible pour le système est pour chaque tâche 1a présentée, de proposer à l'exécutant 3b un choix multiple, par exemple au moyen d'un menu, parmi différentes valeurs de faisabilité. La sélection par l'exécutant 3b d'une valeur de faisabilité associe cette valeur à ladite tâche 1a et réalise ainsi l'évaluation de ladite tâche 1a. Une seule action est alors nécessaire, ce qui permet un traitement rapide. Cette information contenant évaluation, donc la faisabilité de la tâche la est automatiquement transmise par le système au chef 3a. Chaque exécutant 3b se voit ainsi présenter toutes les tâches 1a qui lui ont été affectées a priori jusqu'à ce qu'elles soient toutes évaluées. Dans une troisième étape, le chef 3a, en fonction des faisabilités de chaque tâche 1a, détermine une nouvelle répartition qui affecte définitivement des tâches à des exécutants. Si cette nouvelle répartition est satisfaisante, notamment en terme de probabilité de réussite, le chef 3a valide cette répartition comme définitive et commande au système de la transmettre à tous les exécutants 3b pour mise en exécution. Alternativement le chef 3a peut se contenter de ne transmettre à chaque exécutant 3b que les tâches qui le concernent. Si cette nouvelle répartition n'est pas satisfaisante, le chef 3a peut décider de la modifier, par exemple en reprenant le procédé à la première étape, jusqu'à déterminer une répartition définitive satisfaisante. La mise en exécution consiste pour chaque exécutant 3b à traiter les tâches qui lui ont été affectées.

Selon un mode de réalisation particulier de l'invention la faisabilité comprend n valeurs. Ces valeurs sont échelonnées pour offrir un choix à l'exécutant 3b parmi n valeurs indicatives de la réussite probable de la réalisation d'une tâche 1a. Ainsi pour n = 4, par exemple, l'exécutant peut choisir entre 4 valeurs. Ces 4 valeurs peuvent, à titre indicatif, être libellées en termes de pourcentages : 90%, 60%, 30% et 10% ou encore 95%, 90%, 80% et 20% ou bien encore en termes d'appréciation : Oui, Peut-être, Peut-être pas, Non. Pour n = 3, on peut avoir: Oui à 90%, 1 chance sur 2, Non à 90%.

En fonction de la valeur de faisabilité associée par l'exécutant 3b à une tâche 1a, le chef 3a apprécie s'il convient ou non d'affecter ladite tâche la à cet exécutant 3b ayant déjà évalué et transmis son évaluation.

Alternativement afin de procéder plus vite, le chef peut choisir de se faire assister par le système pour réaliser automatiquement cette affectation. Une manière de procéder avantageuse est la suivante. Les n valeurs de faisabilité sont réparties en deux sous-ensembles. Le premier sous-ensemble A valant affectation alors que le second sous-ensemble N contient les valeurs valant non-affectation. Pour reprendre l'exemple avec des pourcentages, il est commode de considérer les pourcentages élevés (90% et 60%) comme valant affectation. Le contenu des sous-ensembles A et N est un paramètre du système. Ainsi, si la rapidité est privilégiée, le sous-ensemble A valant affectation est étendu pour contenir plus de valeurs (90%, 60% et 30%). A contrario si l'efficacité pour un bon traitement des tâches est privilégiée le sous-ensemble A est réduit (90%). Dans ce second cas le temps d'établissement de la répartition des tâches peut augmenter, mais les chances de réussite de la réalisation des tâches sont augmentées. Dans tous les cas, les valeurs qui ne sont pas retenues dans le premier sous-ensemble se trouvent dans le second. Aucun des deux sous-ensembles A ou N n'est vide.

Un cas particulier consiste à réduire le nombre de valeurs n à deux valeurs. Dans ce cas une des valeurs vaut affectation et la seconde non affectation.

Dans le cas où l'option d'affectation automatique est retenue, lorsqu'une tâche 1a est évaluée par un exécutant 3b accompagnée d'une faisabilité valant affectation, cette évaluation entraîne une affectation automatique par le système de ladite tâche 1a audit exécutant 3b l'ayant « positivement » évaluée. En même temps le système classe cette tâche la dans une nouvelle répartition. Cette nouvelle répartition sert de base à la constitution progressive, au fur et à mesure des évaluations de la répartition définitive.

Compte tenu de l'appréciation locale et de dernière minute de la situation dont il dispose, l'exécutant 3b peut considérer qu'une tâche 1b qui lui échoit dans la répartition a priori est délicate voire impossible à réaliser. Dans ce cas il évalue ladite tâche 1b en lui associant une « mauvaise » faisabilité, selon son estimation. Il en résulte que la tâche 1b n'est pas affectée « d'office » à l'exécutant 3b. L'information est transmise au chef qui est avertit que cette tâche 1b reste à affecter.

La répartition est véritablement définitive lorsque toutes les tâches ont été affectées. Ceci peut être obtenu par une itération jusqu'à ce que toutes les tâches soient « positivement » évaluées par l'un ou l'autre des exécutants 3b et automatiquement affectées ou par action du chef 3a qui peut être autorisé à affecter arbitrairement de manière forcée une tâche 1c à un exécutant 3b.

Selon un mode de réalisation optionnel de l'invention, entre la deuxième et la troisième étape du procédé selon l'invention est insérée la séquence suivante :
- Le chef 3a propose une tâche 1b non affectée à un exécutant 3c autre que celui ou ceux à qui la tâche 1b a déjà été proposée. Un cas particulier est celui ou « l'autre » exécutant 3c est un exécutant 3b à qui la tâche 1b a déjà été proposée, mais qui a entre temps modifié sa situation.
- Cet exécutant 3b, 3c doit évaluer la tâche 1b. Cet exécutant peut à son tour juger, pour lui, de la probabilité de réussite de la tâche 1b. Il associe alors une faisabilité à cette tâche 1b.
- Si le chef le décide ou, en mode automatique, si cette faisabilité vaut affectation, la tâche 1b est affectée à cet exécutant 3c et classée dans la répartition définitive. La séquence se termine et le procédé se poursuit.

Si cette faisabilité vaut non-affectation en mode automatique et si le chef ne force pas l'affection, la tâche 1b n'est pas affectée. Dans ce cas le chef réitère sa proposition de la tâche 1b en appliquant la séquence précédente à un autre exécutant. Selon la finalité et la philosophie du système il est ou non possible de permettre au chef de « forcer » une affectation. Ceci est adapté à des systèmes où la rapidité d'établissement de la répartition est cruciale. Une autre possibilité est d'accepter la mise en exécution d'une répartition définitive non complète. Certaines tâches restent alors temporairement non affectées. Leur affectation est reportée. La mise en exécution peut en effet modifier les situations des exécutants 3b, 3c sur le terrain d'opération.

Pour chaque tâche qui a été évaluée, est disponible une information de faisabilité. Cette information peut s'interpréter comme une probabilité de réussite de la tâche la. Au niveau d'un chef 3a sont disponibles les probabilités de réussite de toutes les tâches qu'il doit traiter et répartir au sein de son équipe. Dans un système hiérarchique il est possible à chaque niveau de remonter cette information. Le chef remonte, via le système, ces informations de probabilités à son chef qui lui-même les retransmet au niveau supérieur. Ainsi chaque niveau de commandement dispose, lorsque les tâches sont réparties et que la répartition est complète ou presque complète, d'une indication sur la probabilité de réussite de la réalisation du plan complet. Cette indication peut apparaître tâche par tâche ou être globalisée par exemple par des moyennes. Ainsi il est possible de connaître une « tenue de situation » (état des positions des membres des équipes et état de réalisation des tâches) à un instant donné, complété de ses probabilités de réussite et d'en inférer la tenue de situation probable estimée à l'issue de la mise à exécution de la répartition des tâches.

Une modification de situation peut rendre possible à un exécutant 3b une tâche 1b qui ne l'était auparavant pas. Une approche alternative, compte tenu de la remarque précédente est de permettre au chef 3a, afin d'améliorer les chances de réussite d'un exécutant 3b sur la réalisation d'une tâche 1b, de demander audit exécutant 3b de modifier sa situation. Ce changement de situation peut être un changement de configuration de l'exécutant, un déplacement ou encore un changement de moyen d'information 8 ou de moyen de traitement de la tâche 1b. Ce changement conduit l'exécutant dans une nouvelle situation relativement à la tâche 1b plus favorable. Lorsque la tâche 1b lui est proposée, les chances d'obtenir une évaluation « positif » sont augmentées. Le chef peut évidemment réitérer cette demande afin d'obtenir une situation encore plus favorable.

Il est souhaitable que l'exécutant 3b dispose de moyens 8 lui permettant de s'informer sur la tâche 1a, afin de pouvoir l'aider à répondre sur la faisabilité de la tâche la. L'exécutant utilise ses sens en direct (vue, ouie...), le cas échéant augmentés par des dispositifs amplificateurs (ex : jumelles, périscope, épiscopes...) ou des capteurs (microphone, caméra vidéo, viseurs,...). Ces moyens 8 permettent une prise d'information locale sur la tâche 1a, sa situation et son environnement, afin d'aider l'exécutant 3b à estimer sa probabilité de réussite de ladite tâche.

Dans certains cas, un premier exécutant 3b peut être le mieux placé pour réaliser une tâche 1a, compte tenu des moyens et compétences dont il dispose, mais s'avérer mal situé pour prendre des informations sur ladite tâche 1a. Il se peut alors qu'un second exécutant 3c soit plus à même de prendre des informations sur la tâche 1a. Le procédé comprend avantageusement une possibilité pour un exécutant 3b de demander que lui soient communiquées des informations sur ladite tâche 1a qu'il s'apprête à évaluer, obtenues via le moyen 8 d'un second exécutant 3b. Ceci peut s'effectuer au moyen d'une commande supplémentaire de l'interface homme machine ou d'un choix supplémentaire lors de la sélection de la faisabilité. Dans une variante de réalisation, le second exécutant 3c peut être consulté pour autoriser/interdire une telle utilisation de son moyen 8. Pour reprendre l'exemple d'un moyen 8 comprenant une caméra vidéo, le premier exécutant 3b peut demander à voir la situation ou l'environnement de la tâche la via la caméra vidéo 8 du second exécutant 3c. Ceci s'avère utile au premier exécutant 3b pour estimer sa probabilité de réussite, alors qu'il ne dispose pas de caméra vidéo 8 ou encore que sa caméra vidéo 8 ne peut voir la situation de la tâche 1a du fait d'un obstacle 12.

Le choix du moyen 8 peut aussi être réalisé automatiquement. Dans ce dernier cas, dès qu'une tâche 1a est proposée à l'évaluation d'un exécutant 3b, lui est simultanément proposée l'utilisation du moyen 8 le plus adapté parmi un de ses moyens 8 propres (locaux) ou un de ceux des moyens 8 de ses coéquipiers. Dans ce cas le système peut apporter une aide en fournissant à l'utilisateur une liste des moyens 8 disponibles. L'utilisateur choisira (par exemple sur la liste déroulante accessible sur son interface Homme/Machine) le moyen 8 qui lui semble le plus approprié pour obtenir la meilleure information.

Dans une catégorie d'applications, la localisation 9a, 9b, 9c de la réalisation de chaque tâche 1a, 1b, 1c est connue. Cette connaissance peut être issue de moyens de perception ou encore d'une connaissance initiale et ne fait pas l'objet de l'invention. Le système est capable de situer chaque tâche 1a, 1b, 1c de par la connaissance de sa localisation 9a, 9b, 9c sur le terrain d'opération 2. Quelques moyens 8 d'information disposent d'un grand champ et n'ont pas besoin d'être orientés. D'autres moyens 8 d'information disposent d'un champ de perception plus réduit et sont avantageusement orientés vers la source d'information pour être plus efficaces. Dans un mode de réalisation avantageux selon l'invention, le système pilote automatiquement l'orientation du moyen 8 d'un exécutant 3b, en direction de la localisation 9a d'une tâche 1a, lorsque ladite tâche la est proposée audit exécutant 3b pour évaluation. Cet arrangement avantageux permet d'accélérer le procédé. Dans une variante la possibilité est offerte à l'exécutant 3b d'activer ou de désactiver cet automatisme d'orientation du moyen 8. En poursuivant avec l'exemple d'une caméra vidéo 8, cette dernière est montée orientable sur une tourelle dont la rotation est pilotée par le système. Lorsqu'une tâche 1a est proposée à l'évaluation, le système qui connaît la localisation 9a de la tâche 1a, calcule l'orientation de la tourelle et oriente ainsi automatiquement la caméra 8 de manière à ce qu'elle « regarde » ladite localisation 9a. Ainsi l'exécutant 3b décide de la faisabilité de la tâche 1a en disposant d'une image de la localisation 9a de ladite tâche 1a.

De manière similaire, dans le cas d'une demande, par un premier exécutant 3b, d'informations issues du moyen 8 d'un second exécutant 3c, ledit moyen 8 peut être automatiquement orienté par le système vers la localisation 9a de la tâche 1a intéressant le premier exécutant. Dans une variante la possibilité est offerte au second exécutant 3c d'activer ou de désactiver cet automatisme d'orientation du moyen 8.

De manière similaire, dans le cas ou un moyen 8 est automatiquement sélectionné par le système, ledit moyen 8 peut être automatiquement orienté par le système vers la localisation 9a de la tâche 1a intéressant l'exécutant 3b en train de procéder à une évaluation.

Selon un mode de réalisation avantageux, le système comprend une interface Homme/Machine tel un écran visualisant un support graphique 10a. Sur ce support sont graphiquement représentées à l'instar du champ d'opération 4 tel que représenté à la figure 1, les différentes tâches 1a, 1b, 1c. Chaque tâche est figurée par un symbole graphique comprenant n représentations distinctes correspondant respectivement à la valeur de faisabilité associée. De manière plus simplifiée, il est possible de limiter à deux représentations correspondant à l'état affecté ou non affecté de la tâche 1a.

Ainsi, un tel support graphique 10a disponible pour le chef 3a, permet par une mise à jour en temps réel, par exemple toutes les secondes, d'indiquer au chef 3a, l'état d'avancement de l'affectation des tâches 1a, 1b, 1c et/ou la probabilité de réussite.

Un mode particulier de réalisation des représentations distinctes associées à une tâche consiste à utiliser un symbole similaire pour les deux états affecté et non affecté, ce symbole étant représenté en rouge pour une tâche la non affectée et ce même symbole étant représenté en vert lorsque la tâche devient affectée.

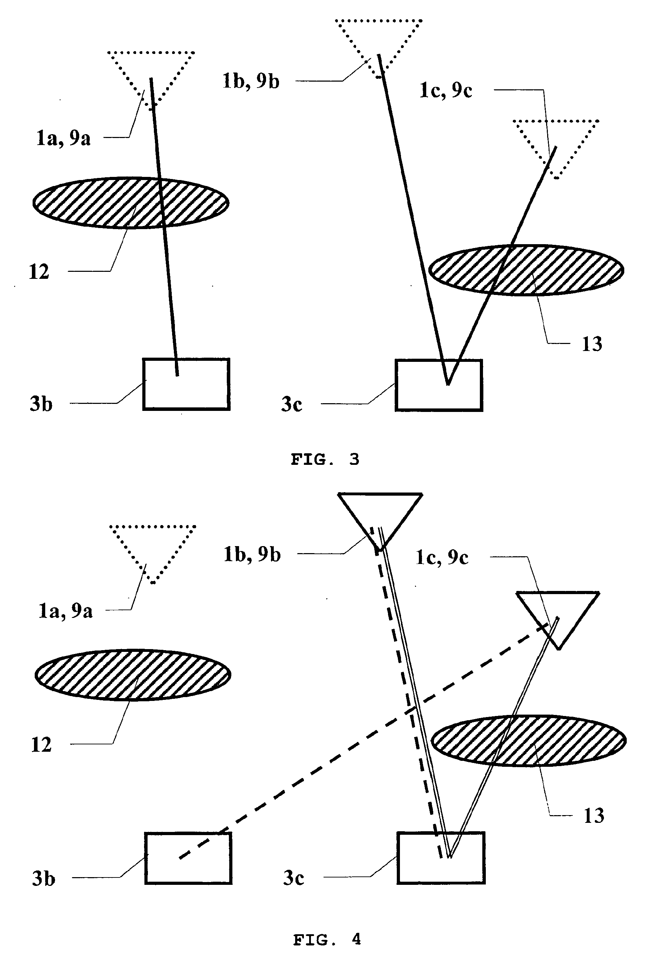

Alternativement ou de manière complémentaire, une représentation graphique avantageuse figure les liens d'affectation entre un exécutant 3a, 3b, 3c et les tâches 1a, 1b, 1c qui lui sont allouées. Dans ce mode de réalisation un symbole graphique relie un exécutant 3b et une tâche 1a qui lui est affectée. Ce symbole graphique peut par exemple être un trait reliant les représentations graphiques de la tâche et de l'exécutant. Ce symbole comprend n représentations distinctes correspondant respectivement à la valeur de faisabilité associée à ladite tâche. De manière plus simplifiée, il est possible de limiter à deux représentations correspondant respectivement à l'état affecté ou non affecté de la tâche 1a. Une représentation supplémentaire correspond avantageusement à l'affectation a priori de la tâche 1a, soit après que le chef ait validé une affectation a priori et avant l'évaluation de ladite tâche 1a. Les représentations se distinguent les unes des autres par la couleur, par le motif (pointillé, tireté, trait plein, trait double,...) comme représenté sur les figures 3 à 6, par l'attribut vidéo normal, inverse vidéo, clignotant) ou encore par tout moyen connu de l'homme du métier.

Il apparaît à l'homme du métier que ce support graphique 10a peut se confondre avec une représentation cartographique, lorsque les tâches 1a, 1b, 1c ont des localisations 9a, 9b, 9c connues.

Avantageusement, une seconde interface Homme/Machine fournissant un support graphique 10b affichant un état similaire ou identique est prévu pour au moins un exécutant 3b.

Un exemple particulier d'utilisation de l'invention est l'application militaire de coordination d'une équipe d'unités dans le but de définir une tactique efficace et optimisée de neutralisation d'un ensemble de cibles 1a, 1b, 1c La répartition des cibles s'effectue entre les différents opérateurs et se nomme plan de délivrance des feux. Dans ce cas d'application illustratif, le terrain d'opération 2 est un champ de bataille. Les tâches à traiter 1a, 1b, 1c sont des cibles 1a, 1b, 1c, localisées et identifiées dont les positions respectives 9a, 9b, 9c sont connues a priori. Une représentation cartographique peut être disponible pour le chef 3a et le cas échéant pour les exécutants 3b, 3c. Le chef 3a est ici un chef de groupe. Les exécutants 3b, 3c sont des équipages d'unité militaire et tout particulièrement le chef d'unité. Le procédé se décline aux différents niveaux hiérarchiques. Ainsi l'équipe est respectivement une division, un bataillon ou un escadron de véhicules blindés. Au niveau le plus bas, chaque exécutant est un véhicule blindé et son équipage. Chaque unité 3b, 3c dispose de moyen de traitement des cibles 1a, 1b, 1c qui peuvent être différents d'une unité 3b à l'autre 3c. Les unités 3b, 3c sont déployées sur le champ de bataille 2 et perçoivent chacune de manière précise une zone locale de leur environnement proche. Cette perception peut être directe ou par l'intermédiaire d'un ou plusieurs moyens 8 apte à fournir des informations. A titre d'exemple on considère pour la suite de la description que le moyen 8 est le moyen de perception principal à la disposition d'un chef d'unité 3b, 3c, à savoir un viseur de tir. Un tel viseur de tir est un moyen optique qui présente un champ très réduit. Il est orientable manuellement ou par l'intermédiaire du système.

Les figures 3, 4, 5, 6, représentent graphiquement sur l'interface Homme/Machine une partie de champ de bataille 2, les étapes d'une mise en oeuvre typique du dispositif et du procédé objet de l'invention. Cette illustration est volontairement limitée, afin de rester simple, à trois cibles 1a, 1b, 1c devant être traitées par deux unités 3b, 3c. Le système connaît ici a priori les positions 9a, 9b, 9c et types des cibles 1a, 1b, 1c ainsi que les positions des unités 3b, 3c. Il connaît de plus les caractéristiques utiles : portée, type de tir (tendu, par-dessus un obstacle, ...), efficacité contre une cible 1a d'un type donné, nombre de munitions restantes,... des systèmes d'armes des unités exécutantes 3b, 3c.

A partir de ces différents éléments le chef de groupe 3a seul, assisté du système ou encore le système seul peut proposer une répartition a priori des cibles 1a, 1b, 1c en fonction des unités 3b, 3c. Cette première étape du procédé conduit, dans notre exemple, à affecter la cible 1a à l'unité 3b et les cibles 1b et 1c à l'unité 3c. La figure 3 illustre cette situation initiale et la répartition a priori. Sur les figures 3, 4, 5 et 6 sont utilisées les mêmes conventions :
- une cible non affectée est figurée en trait pointillé,
- une cible affectée est figurée en trait plein,
- l'affectation a priori est représentée par un trait simple,
- l'utilisation d'un moyen 8 de perception est représentée par un trait tireté,
- l'affectation définitive est représentée par un trait double.

Le système propose au chef d'unité 3b la cible 1a. Ce dernier a activé le ralliement automatique de son viseur de tir 8 et voit alors que la cible la est masquée par un obstacle 12. Ceci ne pouvait être prévu au niveau du système ou du chef de groupe 3a car les obstacles ne sont pas connus a priori, la cartographie ne les mentionnant pas. Sur l'interface homme machine de son terminal 5b, le chef d'unité 3b se voit proposer un choix parmi les options suivantes pour la cible la :
- Oui à 90 %
- une chance sur deux
- Non à 90 %
- Voir la cible avec les moyens d'observation d'une autre unité

Le chef d'unité 3b répond « Non à 90% », car il ne dispose pas d'armement lui permettant de traiter une cible hors de la vue directe. Ce faisant, il évalue la cible 1a. Cependant la valeur de faisabilité de sa réponse vaut non-affectation. Sur l'interface homme machine du chef de groupe 3a, le support graphique 10a (et le cas échéant sur les interfaces homme machine des unités 3b, 3c, les supports graphiques 10b, 10c) la cible 1a est marquée en rouge/pointillé. Le trait simple d'affectation a priori est supprimé.

Le système propose au chef d'unité 3c la cible 1b. Ce dernier n'a pas activé le ralliement automatique de son viseur de tir 8 et ne voit pas la cible 1b. Sur l'interface homme machine de son terminal 5c, le chef d'unité 3c se voit proposer un choix parmi les options suivantes pour la cible 1b :
- Oui à 90 %
- une chance sur deux
- Non à 90 %
- Voir la cible avec les moyens d'observation d'une autre unité

Le chef d'unité 3c répond « Oui à 90% », sans voir la cible car il a précédemment estimé la faisabilité du tir. Ce faisant, il évalue la cible 1b. La valeur de faisabilité de sa réponse vaut affectation. Cette évaluation « positif » affecte la tâche 1b à l'unité 3c. La cible 1b est marquée en vert/trait plein. Lé trait simple d'affectation a priori est remplacé soit par un trait double indiquant affectation définitive soit par un trait d'une couleur représentant la probabilité 90%.

Le système propose au chef d'unité 3c la cible 1c. Ladite cible n'est pas directement visible de 3c du fait de la présence d'un obstacle 13. Sur l'interface homme machine de son terminal 5c, le chef d'unité 3c se voit proposer un choix parmi les options suivantes pour la cible 1c :
- Oui à 90 %
- une chance sur deux
- Non à 90 %
- Voir la cible avec les moyens d'observation d'une autre unité.

Le chef d'unité 3c sélectionne « Voir la cible avec les moyens d'observation d'une autre unité ». Le système examine quelles unités pourraient être susceptibles d'observer la cible 1c et trouve l'unité 3b. Le chef d'unité 3b a autorisé le ralliement automatique de ses moyens d'observation sur une demande d'une autre unité. Son viseur de tir 8 est alors rallié sur la cible 1c. L'image de ce viseur est transmise, via le système, au chef d'unité 3c qui peut prendre sa décision. Il répond « Oui à 90 % ». Ce faisant, il évalue la cible 1c La valeur de faisabilité de sa réponse vaut affectation. Cette évaluation « positif » affecte la tâche 1c à l'unité 3c. La cible 1c est marquée en vert/trait plein. Le trait simple d'affectation a priori est remplacé soit par un trait double indiquant affectation définitive soit par un trait d'une couleur représentant la probabilité 90%.

A ce moment du procédé, représenté à la figure 4, le chef de groupe 3a peut constater que toutes les cibles 1a, 1b, 1c ont été évaluées. Cependant toutes ne sont pas affectées, cette répartition (ou plan de délivrance des feux) n'est pas complète, car elle ne permet pas de traiter la cible 1a.

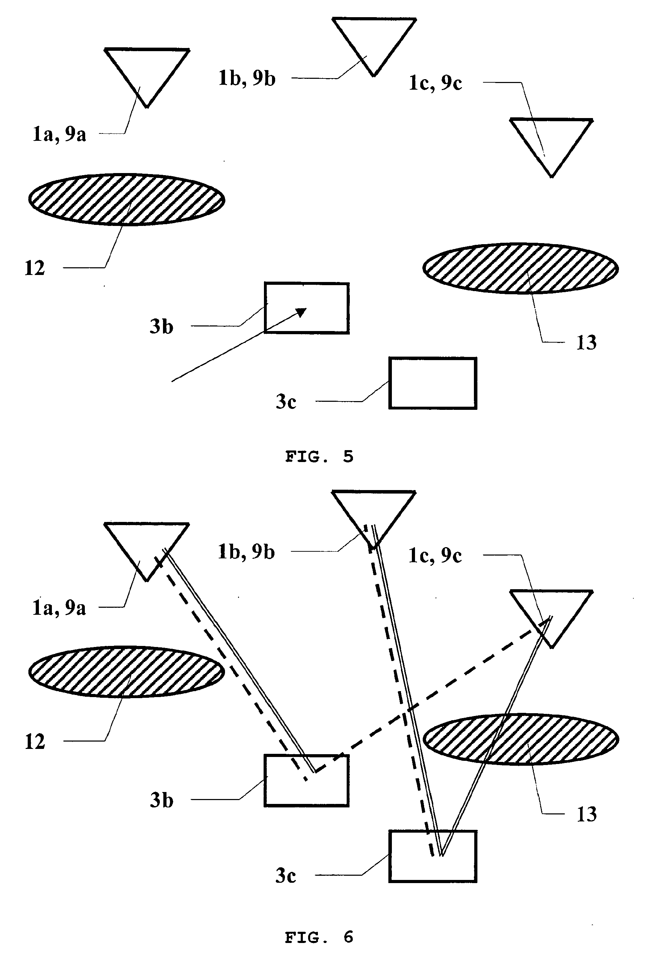

Le chef décide alors d'utiliser un déplacement pour une des unités. Il demande une assistance du système et autorise ce dernier à déplacer au préalable une des unités 3b, 3c. Le système propose de déplacer l'unité 3b. Le chef de groupe 3a envoie l'ordre de déplacement au chef d'unité 3b. Cette étape est représentée à la figure 5, une flèche figurant le déplacement de l'unité 3b. Ensuite le chef de groupe 3a propose à nouveau la cible 1a au chef d'unité 3b (ou alternativement il propose à nouveau toute la répartition a priori). Suite au déplacement de l'unité 3b, la cible la est maintenant en vue et est évaluée avec une faisabilité « Oui à 90 % » par le chef d'unité 3b. Cet état est représenté à la figure 6.

La répartition des cibles ou plan de délivrance des feux étant maintenant complète, le chef de groupe 3a décide alors de passer à la troisième étape, à savoir sa mise en exécution. L'état des probabilités de réussite est communiqué à chaque modification aux niveaux hiérarchiques supérieurs qui peuvent ainsi suivre en temps réel l'état d'avancement de la répartition et connaître la probabilité de réussite de traitement des cibles. Ainsi chaque chef peut décider en connaissance de cause la mise en exécution d'un plan de délivrance des feux en connaissant la tenue de situation actuelle et en estimant la tenue de situation qu'il peut espérer obtenir à l'issue de l'exécution dudit plan de délivrance des feux.

L'invention couvre aussi tout système informatique tel que décrit dans la mesure où il est apte à mettre en oeuvre le procédé dans l'un quelconque de ses modes de réalisation.

## Revendications

1. Système informatique de coordination et d'aide à la répartition de tâches (1a, 1b, 1c) au sein d'une équipe (4) d'opérateurs (3a, 3b, 3c) comprenant des terminaux (5a, 5b, 5c) associés aux opérateurs et décomposés selon deux niveaux hiérarchiques, le premier niveau étant associé à un chef (3a) et le second niveaux étant associé à un exécutant (3b, 3c), chaque terminal (5a, 5b, 5c) associé à un opérateur (3a, 3b, 3c) étant apte à échanger des informations avec les autres terminaux, ledit système comprenant des moyens de communication pour transmettre et assigner, dans une première étape, une répartition a priori des tâches (1a, 1b, 1c) vers les terminaux associés aux opérateurs, **caractérisé en ce que** les moyens de communication sont intégrés dans les terminaux pour permettre, dans une seconde étape, d'évaluer la faisabilité d'une tâche de l'exécutant par des moyens de calculs, la faisabilité de la tâche correspondant à des informations locales au terminal associé à l'exécutant, et de la transmettre vers le terminal (5a) associé au chef (3a), l'étape d'évaluation étant répétée jusqu'à ce que toutes les tâches (1a, 1b, 1c) soient évaluées, et dans une troisième étape permettre au terminal (5a) du chef (3a) de déterminer au moyen de calculs une répartition définitive coïncidant avec les informations locales précédemment renvoyées et de la transmettre vers les terminaux (5a, 5b) associés aux exécutants (3b, 3c).

2. Système selon la revendication 1, **caractérisé en ce que** les terminaux (5a, 5b, 5c) comprennent des moyens pour affecter des valeurs de faisabilité à une tâche, correspondant chacune à un pourcentage de réussite prévisionnel dans la réalisation de ladite tâche.

3. Système selon la revendication 2, **caractérisé en ce qu'**il comprend des moyens automatiques de répartition des valeurs en deux sous-ensembles : un premier sous-ensemble A valant affectation, un second sous-ensemble N valant non-affectation et où, à la fin de la seconde étape, ledit système affecte automatiquement à l'aide du terminal une tâche (1a) à un exécutant (3b) lorsque ledit exécutant (3b) a évalué ladite tâche (1a) avec une faisabilité valant affectation et classe ladite tâche (1a) dans la répartition définitive.

4. Système selon l'une quelconque des revendications précédentes, **caractérisé en ce qu'**il comporte un moyen (8) apte à fournir des informations sur une tâche (1a) à au moins un exécutant (3b).

5. Système selon la revendication 4, **caractérisé en ce que** le moyen (8) de fourniture d'informations d'un autre exécutant (3b) sur la tâche (1a) est accessible à un exécutant (3c) pour que lui soient communiquées des informations avant d'évaluer une tâche (1a).

6. Système selon la revendication 4, **caractérisé en ce que** le moyen (8) de fourniture d'informations comprend une liste déroulante consultable par un exécutant (3c), avant d'évaluer une tâche (1a), pour choisir le plus approprié.

7. Système selon l'une quelconque des revendications 4 à 6, **caractérisé en ce que** les tâches (1a, 1b, 1c) correspondent à des localisations (9a, 9b, 9c) connues, le moyen (8) s'orientant automatiquement vers la localisation (9a) qui correspond à une tâche (1a), lorsque ladite tâche (1a) est proposée à l'évaluation.

8. Système selon l'une quelconque des revendications précédentes, **caractérisé en ce qu'**il comprend une interface Homme/Machine (10a) à disposition du chef (3a) d'un groupe pour afficher en temps réel, pour chaque tâche (1a), une représentation parmi n tâches d'un symbole graphique correspondant à la valeur de la faisabilité associée à ladite tâche (1a).

9. Système selon l'une quelconque des revendications 1 à 7, **caractérisé en ce qu'**il comprend une interface Homme/Machine (10a) à disposition du chef (3a) d'un groupe pour afficher en temps réel, pour chaque affectation d'une tâche (1a) à un exécutant (3b), une représentation parmi n+1 d'un symbole graphique reliant la tâche (1a) et l'exécutant (3b), n représentations correspondant chacune à une valeur de la faisabilité associée à ladite tâche (1a) et une représentation supplémentaire correspondant à l'affectation a priori.

10. Système selon la revendication 8 ou 9, **caractérisé en ce qu'**il comprend une interface Homme/Machine (10a) à disposition de chaque exécutant pour lui afficher les mêmes représentations symboliques fournies au chef (3a) de groupe.

11. Système selon l'une quelconque des revendications précédentes, **caractérisé en ce que** les tâches (1a, 1b, 1c) sont des cibles ennemies à traiter, où le chef (3a) est un chef de groupe, où l'exécutant (3b, 3c) est un chef d'unité militaire et où le moyen (8) apte à fournir des informations sur une tâche (1a) est un viseur de tir.

12. Système selon l'une des revendications précédentes pour assurer la coordination et l'aide à la répartition de tâches au sein d'une équipe (4) d'opérateurs (3a, 3b, 3c) comprenant au moins deux niveaux hiérarchiques tels qu'un chef (3a) associé à au moins un exécutant, système **caractérisé en ce qu'**il comprend des terminaux informatiques équipant chaque opérateur et chef, ainsi que des moyens de communication permettant l'échange d'informations entre les différents niveaux hiérarchiques, les terminaux informatiques comprenant des moyens logiciels permettant la mise en oeuvre du procédé selon l'une des quelconques revendications précédentes.

13. Application du système selon l'une quelconque des revendications à la délivrance des feux sur un champ de bataille.

14. Procédé de mise en oeuvre du système de coordination et d'aide à la répartition de tâches (1a, 1b, 1c) au sein d'une équipe (4) d'opérateurs (3a, 3b, 3c) selon l'une quelconque des revendications 1 à 12, **caractérisé en ce qu'**il comprend les étapes suivantes en alternance :
- proposition d'une tâche (1b) non affectée à un autre exécutant (3c) par le chef,
- évaluation de la tâche (1b) cet exécutant (3c),
- classification par le système de ladite tâche (1b) dans la répartition définitive,
ou alternativement les étapes suivantes :
- affectation par le chef (3a) d'une tâche (1b) à un exécutant (3b),
- classification par ledit système de ladite tâche (1b) dans la répartition définitive,
ladite alternance étant réitérée, de préférence, jusqu'à ce que toutes les tâches (1a, 1b, 1c) soient affectées à un exécutant (3a, 3b, 3c) et soient classées dans la répartition définitive.

15. Procédé selon la revendication 14, **caractérisé en ce que**, lors de chaque évaluation d'une tâche (1a), la valeur de faisabilité associée est remontée à au moins un niveau hiérarchique directement supérieur à celui de l'opérateur ayant acquitté la tâche.

16. Procédé selon l'une quelconque des revendications précédentes mis en oeuvre dans un groupe associant plusieurs équipes d'opérateurs ayant chacune un chef, groupe comprenant également au moins un troisième niveau hiérarchique supervisant les différentes équipes, au moins un des chefs d'équipe étant également opérateur pour le troisième niveau hiérarchique.
